# EUROPEAN PATENT APPLICATION

(11) **EP 4 268 597 A1**
(43) Date of publication of application: **01.11.2023**
(21) Application number: 21911552.4
(22) Date of filing: 22.12.2021
(51) Int. Cl.: A21C 5/00, A21C 9/04, A21D 13/40, A21D 13/60

(54) **STICK-TYPE FOOD PREPARATION SYSTEM, STICK-TYPE FOOD FORMING APPARATUS, AND TOPPING APPLYING APPARATUS FOR STICK-TYPE FOODS**

(30) Priority: 23.12.2020 KR 20200182121; 21.12.2021 KR 20210183768
(71) Applicant: CJ Cheiljedang Corporation, Seoul 04560 (KR)
(72) Inventor: KIM, Yeung Tak, Seoul 04560 (KR); KIM, Seung Min, Seoul 04560 (KR)
(74) Representative: Bandpay & Greuter
(86) International application number: PCT/KR2021/019657
(87) International publication number: WO 2022/139486

(57) **Abstract**

A stick-type food preparation system according to the present invention comprises: a forming apparatus for covering a filling-ingredient stick, which is formed by skewering a filling ingredient with a stick, with dough; an applying apparatus for applying a topping to a dough stick which is formed from the filling-ingredient stick in the forming apparatus; and a deep fryer for deep-frying in oil a semi-finished product which is formed by applying the topping to the dough stick in the applying apparatus.

## Description

### TECHNICAL FIELD

The present invention relates to a stick-type food preparation system for preparing stick-type foods, a stick-type food forming apparatus, and a topping applying apparatus for stick-type foods.

### BACKGROUND ART

For preparation of stick-type foods, a food is skewered with a stick, the skewered food is covered with a dough having an appropriate shape, and then a topping such as bread crumbs or potato blocks, is applied onto the dough according to the types of the stick-type foods.

Both the process of covering with the dough and the process of applying the topping are performed through manual works by workers. Thus, there may be a defect in dough formation or a defect in topping applying, for example, the dough may be formed to have a non-uniform shape or the topping may be non-uniformly applied. There is also a problem that the processes cause a great increase in fatigue of workers.

### DISCLOSURE OF THE INVENTION

### TECHNICAL PROBLEM

The present invention has been devised to solve the problems as above, and an object of the present invention is to provide a stick-type food preparation system for automatically preparing stick-type foods having uniform quality, a stick-type food forming apparatus, and a topping applying apparatus for the stick-type foods.

### TECHNICAL SOLUTION

A stick-type food preparation system according to an embodiment of the present invention includes: a forming apparatus provided to cover a filling-ingredient stick, which is provided by skewering a filling ingredient with a stick, with a dough; an applying apparatus provided to apply a topping to a dough stick provided from the filling-ingredient stick in the forming apparatus; and a deep fryer provided to deep-fry in oil a semi-finished product provided by applying the topping to the dough stick in the applying apparatus.

A stick-type food forming apparatus according to an embodiment of the present invention includes: a formation rotating part provided to rotate a filling-ingredient stick that is gripped by a transfer apparatus and provided by skewering a filling ingredient with a stick; and a dough nozzle through which a dough is ejected onto the filling-ingredient rotated by the formation rotating part.

A topping applying apparatus for the stick-type foods according to an embodiment of the present invention includes: a topping part including a topping plate provided to be disposed below a dough stick that is gripped by a transfer apparatus and provided by skewering a filling ingredient with a stick and applying the dough; and a topping rotating part provided to rotate the dough stick gripped by the transfer apparatus with respect to the topping part so as to apply the topping accommodated in the topping part onto the dough stick, which is gripped by the transfer apparatus, from above the topping plate.

### ADVANTAGEOUS EFFECTS

Accordingly, the stick-type products having the uniform quality may be automatically prepared.

### BRIEF DESCRIPTION OF THE DRAWINGS

FIG. 1 is a perspective view of a food processing system according to an embodiment of the present invention.
FIG. 2 is a view of a food processing system when viewed downward from top according to an embodiment of the present invention.
FIG. 3 is a perspective view of a filling-ingredient supply apparatus according to an embodiment of the present invention.
FIG. 4 is a perspective view of a stick supply apparatus according to an embodiment of the present invention.
FIG. 5 is a perspective view of a forming apparatus according to an embodiment of the present invention.
FIG. 6 is a conceptual view illustrating a forming apparatus according to an embodiment of the present invention.
FIG. 7 is a perspective view illustrating a dough nozzle of a forming apparatus and a transfer apparatus according to an embodiment of the present invention.
FIGS. 8 and 9 are perspective views of an applying apparatus when viewed at different angles, respectively, according to an embodiment of the present invention.
FIG. 10 is a perspective view illustrating an applying apparatus when viewed in a front and rear direction according to an embodiment of the present invention.
FIG. 11 is a conceptual view illustrating an applying apparatus except for a topping supply part according to an embodiment of the present invention.
FIG. 12 is a perspective view illustrating a state in which a semi-finished product separating part, a semi-finished product arranging part, and a deep fryer of a food processing system are disposed according to a modified example of an embodiment of the present invention.
FIG. 13 is a perspective view of a deep fryer according to an embodiment of the present invention.
FIG. 14 is a view illustrating a state in which an inner structure of a deep fryer is exposed to the outside according to an embodiment of the present invention.

### MODE FOR CARRYING OUT THE INVENTION

Hereinafter, some embodiments of the present invention will be described in detail with reference to the accompanying drawings. Note that the same or similar components in the drawings are designated by the same reference numerals as far as possible even if they are shown in different drawings. In the following description of the present invention, a detailed description of known functions and configurations incorporated herein will be omitted to avoid making the subject matter of the present invention unclear.

The terms such as "first", "second", "A", "B", "(a)", and "(b)", may be used to describe of elements according to an embodiment of the present invention. However, since the terms are used only to distinguish an element from another, the essence, sequence, and order of the elements are not limited by them. When it is described that an element is "coupled to", "engaged with", or "connected to" another element, it should be understood that the element may be directly coupled or connected to the other element but still another element may be "coupled to", "engaged with", or "connected to" the other element between them.

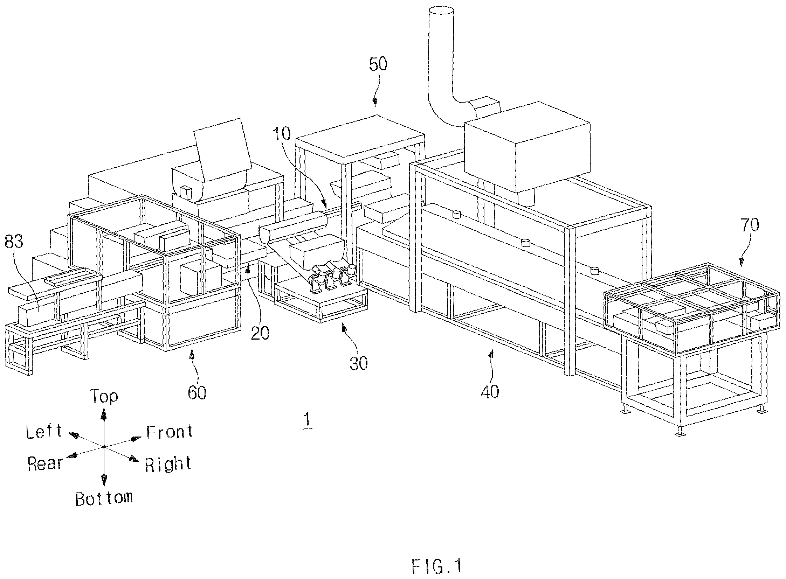

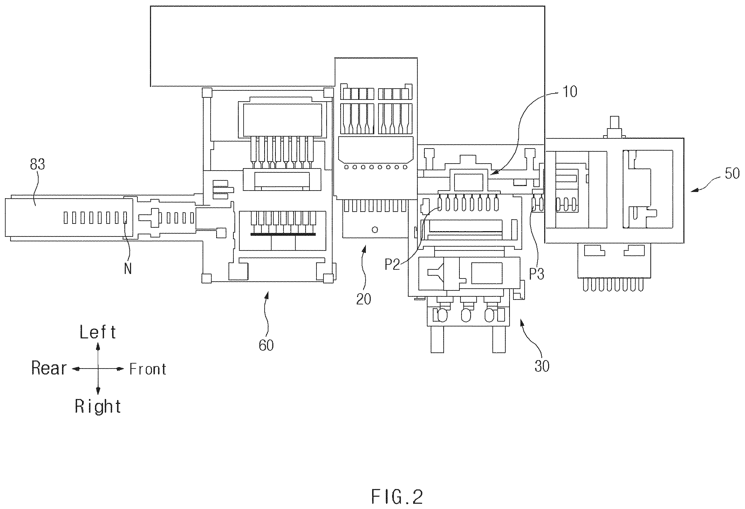

FIG. 1 is a perspective view of a food processing system 1 according to an embodiment of the present invention. FIG. 2 is a view of the food processing system 1 when viewed downward from top according to an embodiment of the present invention.

Referring to the drawings, the stick-type food processing system 1 according to an embodiment of the present invention may include a forming apparatus 20, an applying apparatus 30, and a deep fryer 40.

In an embodiment of the present invention, a front direction is assumed as a reference direction. However, the reference direction is not limited thereto. In this specification of the present invention, front, rear, left, right, top, and bottom directions are expressions used for convenience of explanation, and may be relatively determined according to directions in which the food processing system 1 and components thereof are disposed.

The stick-type food processing system 1 according to an embodiment of the present invention processes a stick S, a filling-ingredient stick P1, a semi-finished product P3 stick S, and a semi-finished product P3 while transferring the same from a rear side to the front. Thus, a transfer direction may mean the front direction. A filling-ingredient supply apparatus 80, a stick supply apparatus 60, the forming apparatus 20, the applying apparatus 30, and the deep fryer 40, which will be described later, may be aligned and connected to each other in sequence from the rearmost side of the stick-type food processing system 1, and a transfer apparatus 10 extending in a front and rear direction may be disposed across the stick supply apparatus 60, the forming apparatus 20, and the applying apparatus 30. This stick-type food processing system 1 may operate to automatically produce the stick-type foods.

### Filling-ingredient supply apparatus (80)

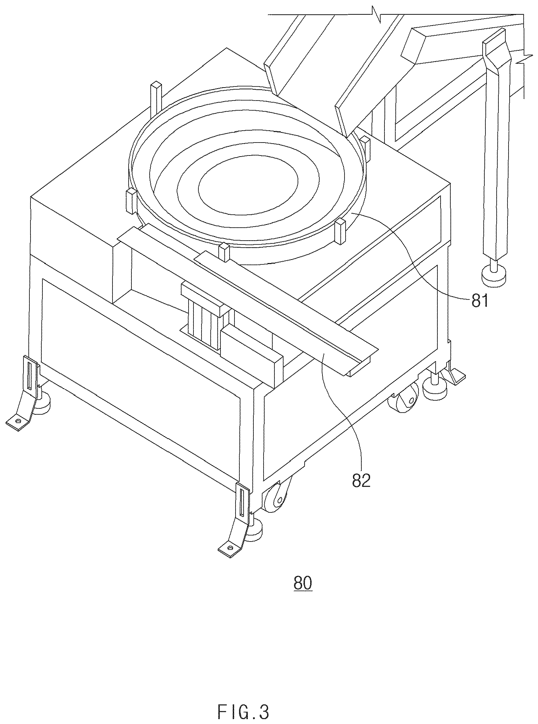

FIG. 3 is a perspective view of the filling-ingredient supply apparatus 80 according to an embodiment of the present invention.

The stick-type food processing system 1 according to an embodiment of the present invention may include the filling-ingredient supply apparatus 80. A filling ingredient N supplied by the filling-ingredient supply apparatus 80 may be at least one of sausages, hams, and cheeses that are solid food ingredients capable of being skewered with the stick S. However, the type of the filling ingredient N is not limited thereto.

The filling-ingredient supply apparatus 80 may separate the filling ingredients N provided in bulk individually to be discharged. The filling-ingredient supply apparatus 80 may include a filling-ingredient separation tub 81, to which the bulk-type filling ingredients N are supplied and which has a drum type inner space, and a filling-ingredient moving passage 82 through which the discharged filling ingredients N move when the individually separated filling ingredients N are discharged through a hole provided in a side surface of the filling-ingredient separation tub 81. The bulk-type filling ingredients N may be separated into individual filling ingredients N by rotation of the filling-ingredient separation tub 81. When, as the filling-ingredient separation tub 81 vibrates, the individual filling ingredients N ascend along a spiral passage, which is provided on an inner side surface of the filling-ingredient separation tub 81, to be transferred to the filling-ingredient moving passage 82, the filling ingredients N may be aligned, and the non-aligned filling ingredients N may fall into the filling-ingredient separation tub 81 again to undergo the same process again. The filling-ingredient supply apparatus 80 may be a parts feeder.

The individual filling ingredients N may be aligned on a filling-ingredient transfer part 83 connected to the filling-ingredient moving passage 82. The filling-ingredient transfer part 83 may be a conveyor belt. When the filling ingredients N are supplied to the filling-ingredient transfer part 83 one by one through the filling-ingredient moving passage 82 while the filling-ingredient transfer part 83 rotates, the individual filling ingredients N may be spaced apart from each other to be seated on the filling-ingredient transfer part 83 and move in the spaced state in the transfer direction. The filling ingredients N may be transferred in a state in which a length direction of the filling ingredients N is aligned in the left and right direction.

### Stick supply apparatus (60)

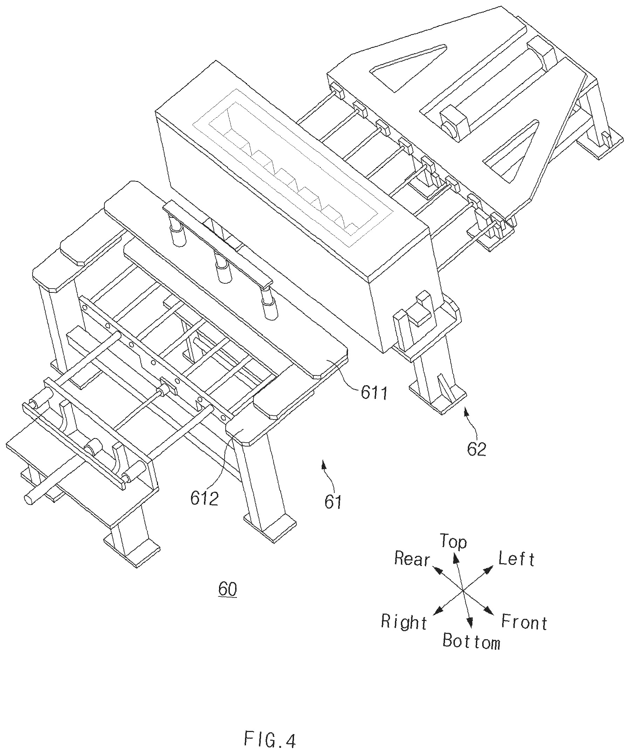

FIG. 4 is a perspective view of a stick supply apparatus 60 according to an embodiment of the present invention.

The stick-type food processing system 1 according to an embodiment of the present invention may include the stick supply apparatus 60. The stick supply apparatus 60 is an apparatus that supplies the stick S to each of the filling ingredients N, which are individually separated and transferred, to provide the filling-ingredient stick P1.

The stick supply apparatus 60 may include a filling-ingredient fixing part 61, which fixes the supplied filling ingredients N, and a stick inserting part 62 which skewers, with the stick S, each of the filling ingredients N fixed by the filling-ingredient fixing part 61. When the filling ingredients N, which are individually separated and transferred, reach the stick supply apparatus 60, the filling ingredients N are seated on a filling-ingredient fixing support 612 of the filling-ingredient fixing part 61, and the filling-ingredient fixing part 61 allows a plate-shaped filling-ingredient gripping member 611, which is disposed above the filling ingredients N, to approach the filling ingredients N so as to grip each of the filling ingredients N between the filling-ingredient fixing support 612 and the filling-ingredient gripping member 611. The stick inserting part 62 grips the sticks S, which are disposed at positions corresponding to the filling ingredients N at a left side of the filling ingredients N, to allow the sticks S to approach the filling ingredients N in a right direction, so that the sticks S are inserted into the filling ingredients N, respectively. That is, the stick inserting part 62 is linearly movable in the left and right direction. As the stick S is inserted into the filling ingredient N, the filling-ingredient stick P1 is provided.

The filling-ingredient stick P1 provided by the stick supply apparatus 60 is transferred by the transfer apparatus 10. The transfer apparatus 10 may already surround the stick S in the inserting of the stick S into the filling ingredient N, to grip a stick S portion of the filling-ingredient stick P1 after the filling-ingredient stick P1 is completed, or alternatively may receive the completed filling-ingredient stick P1 and then grip the stick S portion.

### Transfer apparatus (10)

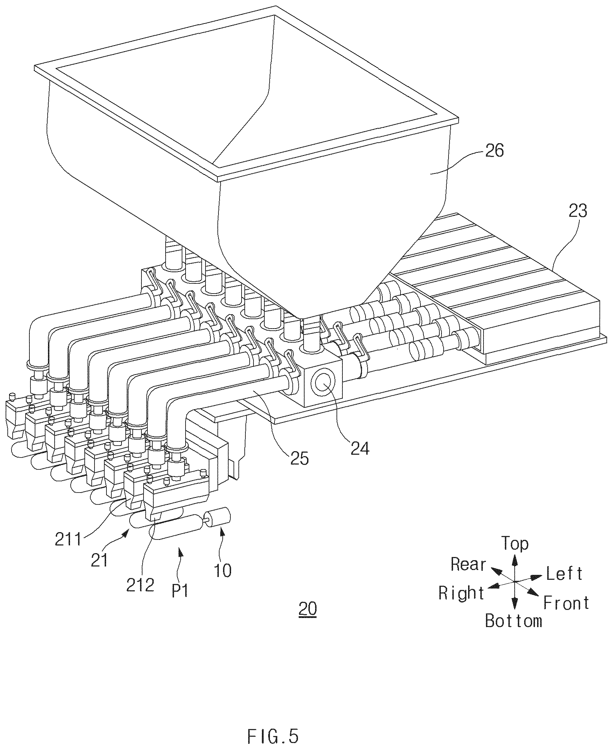

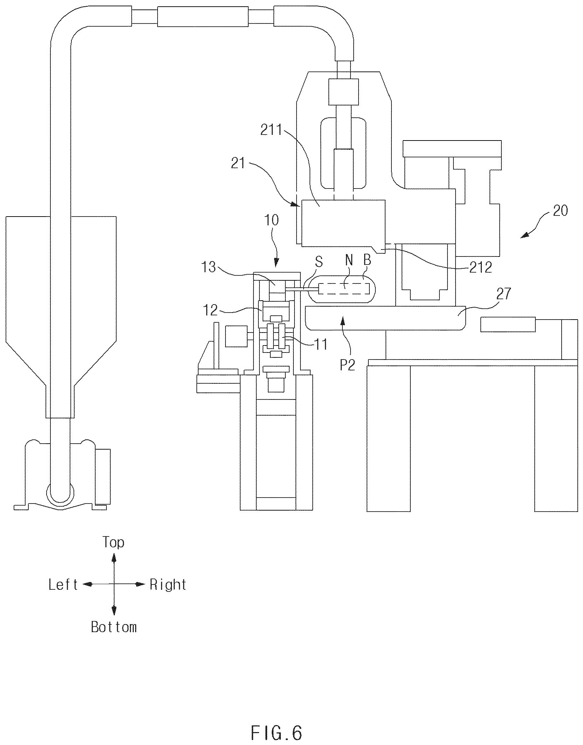

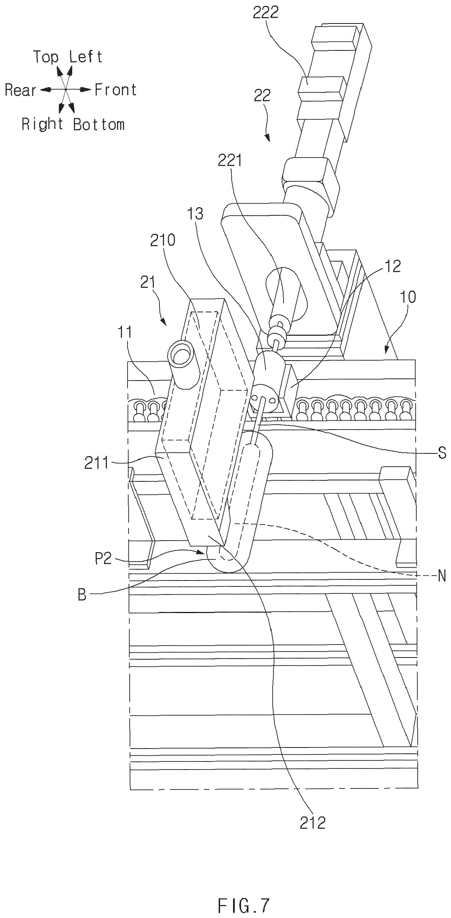

FIG. 5 is a perspective view of the forming apparatus 20 according to an embodiment of the present invention. FIG. 6 is a conceptual view illustrating the forming apparatus 20 according to an embodiment of the present invention. FIG. 7 is a perspective view illustrating a dough nozzle 21 of the forming apparatus 20 and the transfer apparatus 10 according to an embodiment of the present invention.

The stick-type food processing system 1 according to an embodiment of the present invention may include the transfer apparatus 10. The transfer apparatus 10 is an apparatus that grips the stick S to transfer the semi-finished product P3 to the deep fryer 40 through the forming apparatus 20 and the applying apparatus 30 in the transfer direction.

The transfer apparatus 10 may include a transfer operating part 11 extending in the transfer direction. The transfer operating part 11 may be configured as a conveyor belt. The transfer operating part 11 may rotate. According to the rotation of the transfer operating part 11, an object seated on a top surface of the transfer operating part 11 may move in the front direction that is the transfer direction.

The transfer apparatus 10 may include a transfer frame 12. The transfer frame 12 may be coupled to the transfer operating part 11 so as to move in the transfer direction according to the rotation of the transfer operating part 11. The transfer frame 12 may be provided in plurality so that the plurality of transfer frames 12 are disposed to be spaced apart from each other in the front and rear direction. The transfer frame 12 may include a base plate, which is coupled to the transfer operating part 11, and a restricting plate provided to extend upward from each of front and rear ends of the base plate.

The transfer apparatus 10 may include a gripping part 13. The gripping part 13 may grip the stick S. The gripping part 13 may be rotatably coupled to the transfer frame 12. The transfer frame 12 may be rotatably coupled in an axial direction that is a front and rear direction with respect to the transfer frame 12. Thus, the stick S may move in the transfer direction by the transfer apparatus 10, and may rotate as the gripping part 13 rotates by other components to be described later. As a plurality of gripping blocks included in the gripping part 13 are close to each other, the stick S may be gripped between the gripping blocks. As the plurality of gripping blocks are away from each other, the gripping of the stick S may be released. The plurality of gripping blocks may have a shape like a cylinder divided into three portions at equal angles.

The plurality of gripping parts 13 may be coupled to the transfer frame 12. Thus, the plurality of gripping parts 13 may be aligned in the front and rear direction. Thus, the plurality of sticks S may be gripped by the plurality of gripping parts 13, respectively, to move together in the front and rear direction.

### Forming apparatus (20)

The forming apparatus 20 is an apparatus that covers, with a dough B, the filling-ingredient stick P1 provided by skewering the filling ingredient N with the stick S. A basic shape of cooked food may be provided by the forming apparatus 20. The filling-ingredient stick P1 is covered with the dough B by the forming apparatus 20 to provide a dough stick P2. The dough B supplied to the filling-ingredient stick P1 by the forming apparatus 20 may be a wheat flour dough, but the material constituting the dough B is not limited thereto. As the filling-ingredient stick P1 is covered with the dough B by the forming apparatus 20 to provide an overall shape of the stick-type food, the forming apparatus 20 may be a stick-type food forming apparatus.

The forming apparatus 20 may include a dough nozzle 21. The dough nozzle 21 may eject the dough B onto the filling-ingredient stick P1. When the dough nozzle 21 ejects the dough B, a formation rotating part 22 to be described later may rotate the filling-ingredient stick P1.

The dough nozzle 21 may include a nozzle body. A slit 210 may be defined in the nozzle body to constitute a path through which the dough B is ejected. The dough B may be ejected through the slit 210. The slit 210 may have a shape of a long hole that extends in a reference direction, which is a direction in which the stick S extends from the transfer apparatus 10, i.e., in the right direction. The slit 210 may have a shape that opens the nozzle body in the top and bottom direction so that the dough B is ejected downward from an upper side to be applied onto the filling-ingredient stick P1 transferred to a lower side of the nozzle body by the transfer apparatus 10.

The nozzle body may include a nozzle body base portion 211 and a nozzle body protrusion 212. The nozzle body base portion 211 may have the slit 210 defined therein and have a bottom surface perpendicular to the top and bottom direction. The nozzle body protrusion 212 may be provided to protrude downward from a right end of the bottom surface of the nozzle body base portion 211. The nozzle body protrusion 212 may have a tapered outer appearance having a width that gradually decreases downward in the left and right direction. A left boundary of the nozzle body protrusion 212 may have a profile inclined to the left in the top direction. A right boundary of the nozzle body protrusion 212 may have a profile extending in the top and bottom direction.

As the nozzle body protrusion 212 is disposed, the dough B may be properly applied onto a right end of the filling ingredient N so that the dough B properly covers the right end of the filling ingredient N. The dough applied onto the right end of the filling ingredient N may be in contact with the left boundary of the nozzle body protrusion 212 so that a streamlined shape is formed.

The nozzle body may be elevatable and movable in the left and right direction to be parallel to a direction in which the stick S extends. In order to enable this linear motion with respect to the nozzle body, the nozzle body may be connected to a linear driving part such as a linear actuator, an LM guide, or a lead screw, but the type of the linear driving part is not limited thereto.

The dough B ejected from the nozzle may be uniformly applied onto the filling ingredient N like a general corn dog shape. Alternatively, as the nozzle body elevates and linearly moves in the left and right direction, the dough B may have a shape spirally surrounding the filling ingredient N, or a plurality of annular doughs B spaced apart from each other in the left and right direction may surround the filling ingredient N. The shape of the dough B applicable onto the filling ingredient N is not limited thereto.

The nozzle body may be provided in plurality. The plurality of nozzle bodies may be disposed at positions corresponding to positions at which the filling-ingredient sticks P1 are moved and arrive by the transfer apparatus 10, respectively.

The forming apparatus 20 may include a dough hopper 26 that accommodates the dough B. The dough B accommodated in the dough hopper 26 may be discharged downward through a lower end of the dough hopper 26 to reach a dough mooring part 24. The dough hopper 26 may have a shape having a width that gradually decreases downward in the left and right direction.

The forming apparatus 20 may include the dough mooring part 24 and a dough pressing part 23. The dough B discharged from the dough hopper 26 reaches the dough mooring part 24, and the dough pressing part 23 connected to the dough mooring part 24 pushes this dough B in the dough mooring part 24. The dough pressing part 23 may be connected to a left side of the dough mooring part 24 to push the dough B to the right. In order to press and discharge the dough B, the dough pressing part 23 may be an air cylinder or a hydraulic cylinder, or may be a blower that presses the dough B using fluid such as air. However, the type of the dough pressing part 23 is not limited thereto. As the dough pressing part 23 is controlled, a speed at which the dough B is ejected through the nozzle body may be adjusted.

The forming apparatus 20 may include a dough discharging pipe 25. The dough discharging pipe 25 may be connected to a right side of the dough mooring part 24 and an upper side of the nozzle body and deliver, to the nozzle body, the dough B pressed and discharged by the dough pressing part 23. The dough discharging pipe 25 may have a shape that is bent into an "L" shape.

At least one of the dough mooring part 24, the dough pressing part 23, or the dough discharging pipe 25 may be provided in plurality. Among the dough mooring part 24, the dough pressing part 23, and the dough discharging pipe 25, one component provided in plurality may be connected one to one to another component provided in plurality.

The forming apparatus 20 may include the formation rotating part 22. The formation rotating part 22 may rotate the filling-ingredient stick P1 that is gripped by the transfer apparatus 10 and provided by skewering the filling ingredient N with the stick S. The formation rotating part 22 may rotate the filling-ingredient stick P1 in the left and right direction as an axial direction, which is a direction in which the stick S extends.

The formation rotating part 22 may be disposed at a left side of the gripping part 13. The formation rotating part 22 may include a formation rotating tool 221, and a formation rotating driver 222 that rotates and linearly moves this formation rotating tool 221. The formation rotating driver 222 may linearly moves the formation rotating tool 221 in the left and right direction and rotate the formation rotating tool 221 in the left and right direction as an axial direction. Thus, the formation rotating driver 222 may include a component for rotational driving, such as a motor or an actuator, and a component for linear motion, such as a lead screw or a telescopic structure, but the types of the components are not limited thereto. The formation rotating tool 221 may have a right end having a shape corresponding to a shape of a left end of the gripping part 13.

The formation rotating part 22 may move to the right to approach the gripping part 13 or move to the left to be separated from the gripping part 13 in the left and right direction. The formation rotating part 22 may approach the gripping part 13 to be connected to the gripping part 13, and may rotate the gripping part 13 as rotating in a state of being connected to the gripping part 13. That is, the formation rotating part 22 may be selectively coupled to the gripping part 13 to rotate the gripping part 13 with respect to the transfer frame 12. The formation rotating part 22 and the gripping part 13 may have shapes corresponding to each other so that the formation rotating part 22 and the gripping part 13 are coupled to each other by approaching each other. For example, the formation rotating part 22 may have a protrusion having a shape extending in the top and bottom direction, and the gripping part 13 may have a groove into which this protrusion is insertable.

As the formation rotating part 22 rotates the gripping part 13, the filling-ingredient stick P1 gripped by the transfer apparatus 13 may rotate. In a state in which the nozzle body ejects the dough B, the filling-ingredient stick P1 may be rotated by the formation rotating part 22 so that the dough B covers the filling ingredient N while surrounding the filling ingredient N of the filling-ingredient stick P1.

The forming apparatus 20 may include a dough support 27. The dough support 27 may be disposed below the nozzle body and the transferred filling-ingredient stick P1. When the dough B ejected by the nozzle body does not cover the filling-ingredient stick P1 and falls, the dough support 27 may function as a support, on which the dough B is seated, to prevent the dough B from falling onto other components to cause malfunction or contaminate the components.

### Applying apparatus (30)

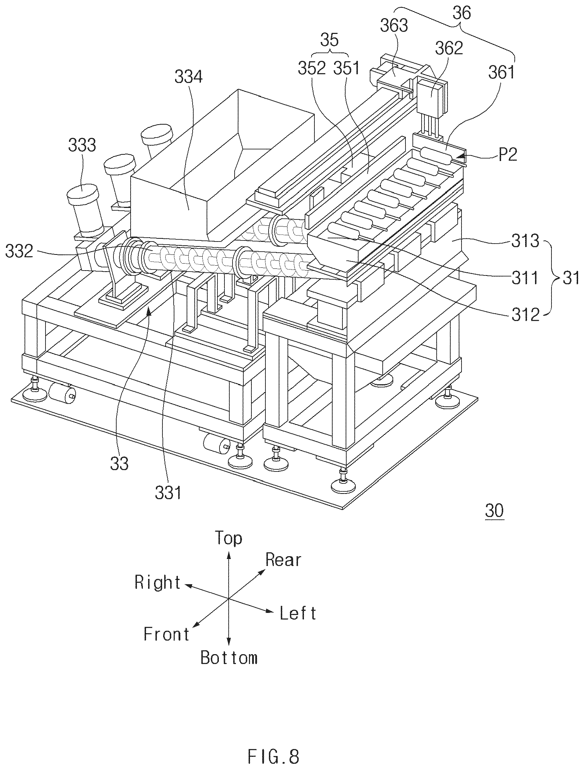

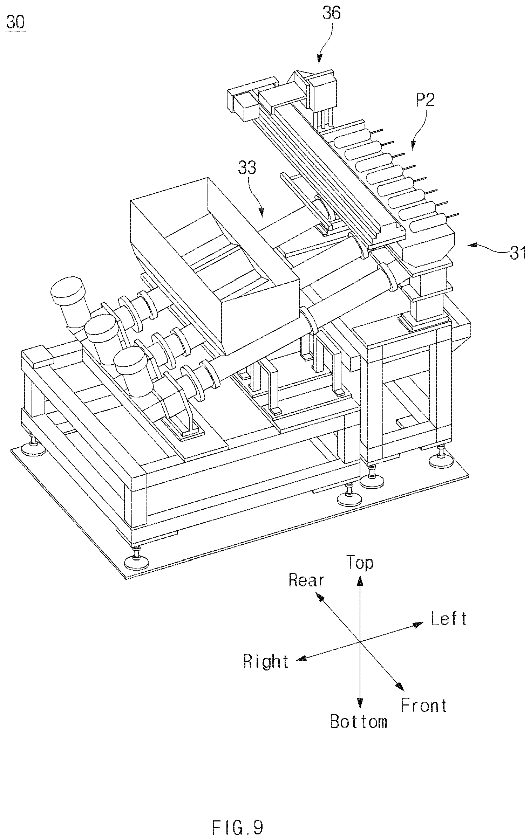

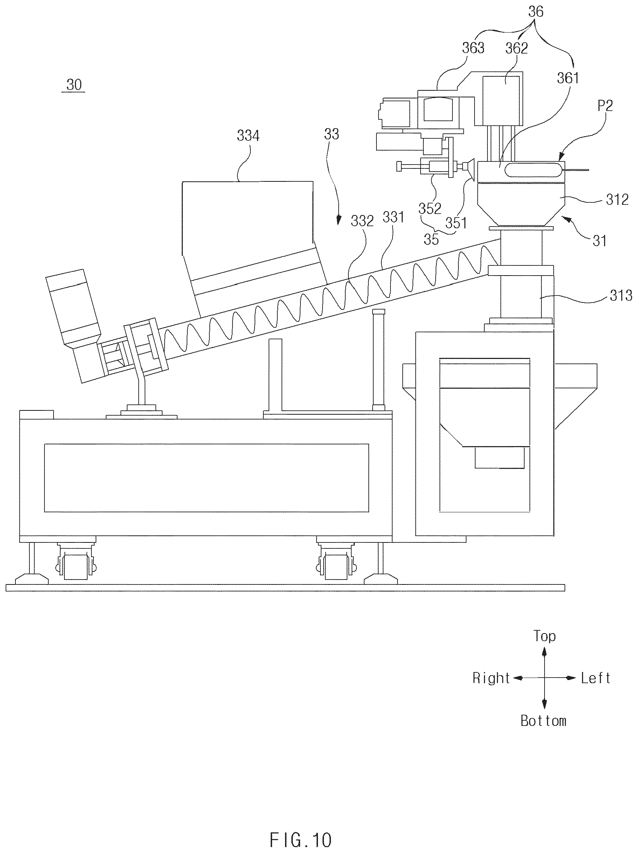

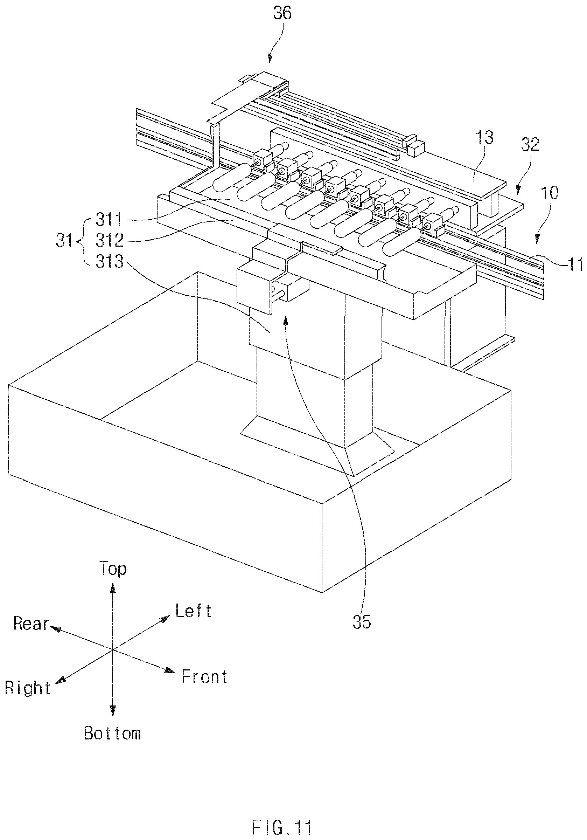

FIGS. 8 and 9 are perspective views of the applying apparatus 30 when viewed at different angles, respectively, according to an embodiment of the present invention. FIG. 10 is a perspective view illustrating the applying apparatus 30 when viewed in the front and rear direction according to an embodiment of the present invention. FIG. 11 is a conceptual view illustrating the applying apparatus 30 except for a topping supply part 33 according to an embodiment of the present invention.

The applying apparatus 30 is an apparatus that applies a topping onto the dough stick P2, which is provided from the filling-ingredient stick P1 in the forming apparatus 20, to produce a semi-finished product P3. Thus, the applying apparatus 30 may be disposed in front of the forming apparatus 20, next to the forming apparatus 20 in the transfer direction. The topping supplied by the applying apparatus 30 may be a bread crumb, sugar, potato block that is a potato formed in the form of a cube, or the like, but the type thereof is not limited thereto. As the topping is applied onto the dough stick P2 by the applying apparatus 30 to make the stick-type food semi-productized, the applying apparatus 30 may be a stick-type food topping applying apparatus.

The applying apparatus 30 may include a topping part 31. The topping part 31 may include a topping plate 311 disposed below the dough stick P2. The dough stick P2 gripped by the transfer apparatus 10 may reach the applying apparatus 30 through the forming apparatus 20, and the transfer apparatus 10 may transfer the dough stick P2 to dispose the dough stick P2 on an upper side of the topping plate 311.

The topping plate 311 may be provided to have a shape of a plate perpendicular to the top and bottom direction. A topping housing 312 may surround a circumference of the topping plate 311. Thus, a topping space, which has an upper side opened and in which the topping is capable of being accommodated, may be defined by the topping plate 311 and the topping housing 312. As the dough stick P2 is disposed in the topping space, the topping accommodated in the topping space may be applied onto the dough stick P2. The topping housing 312 and the topping plate 311 may perform the applying of the topping on the dough stick P2 while reciprocally moving in the front and rear direction.

The topping plate 311 may move in the top and bottom direction to be close to the dough stick P2 or to be away from the dough stick P2. This operation may be called tapping. As the topping plate 311 performs the tapping operation, the topping seated on the topping plate 311 may be applied onto the dough B of the dough stick P2 disposed on the upper side of the topping plate 311. For the tapping operation, the topping part 31 may include a tapping driver 313 that is connected to the topping plate 311 and moves vertically. The tapping driver 313 may include a motor for tapping, and a cam that is connected to the motor for tapping and converts rotational driving force of the motor for tapping into a linear motion. However, the implementation manner of the tapping operation is not limited thereto. The tapping driver 313 may be disposed at a lower side of the topping plate 311.

The applying apparatus 30 may include a topping rotating part 32. The topping rotating part 32 may rotate the dough stick P2 gripped by the transfer apparatus 10 with respect to the topping part 31 in order to apply the topping accommodated in the topping part 31 onto the dough stick P2, which is gripped by the transfer apparatus 10, from above the topping plate 311. The topping rotating part 32 may rotate the dough stick P2 in an axial direction that is the direction in which the stick S extends. The topping rotating part 32 may be disposed at the left side of the gripping part 13. The topping rotating part 32 may move to the right to approach the gripping part 13 or move to the left to be separated from the gripping part 13 in the left and right direction. The topping rotating part 32 may approach the gripping part 13 to be connected to the gripping part 13, and may rotate the gripping part 13 as rotating in a state of being connected to the gripping part 13. That is, the topping rotating part 32 may be selectively coupled to the gripping part 13 to rotate the gripping part 13 with respect to the transfer frame 12. The topping rotating part 32 and the gripping part 13 may have shapes corresponding to each other so that the topping rotating part 32 and the gripping part 13 are coupled to each other by approaching each other. For example, the topping rotating part 32 may have a protrusion having a shape extending in the top and bottom direction, and the gripping part 13 may have a groove into which this protrusion is insertable.

As the topping rotating part 32 rotates the gripping part 13, the dough stick P2 gripped by the gripping part 13 may rotate. As the dough stick P2 is rotated by the topping rotating part 32, the topping may cover the dough B while surrounding the dough B of the dough stick P2. The tapping operation may be added to this operation so that the topping is uniformly applied onto the dough B.

The applying apparatus 30 may include the topping supply part 33. The topping supply part 33 may be connected to a lower end of the topping part 31 so as to allow the topping to ascend to be supplied to the topping part 31. As the operations are repeated, the topping covered on the dough stick P2 may move out of the topping part 31 and thus, an amount of the topping accommodated in the topping part 31 may decrease. The topping supply part 33 may replenish the topping part 31 with the topping so that the amount of the topping accommodated in the topping part 31 is uniformly maintained. The amount of the topping may be the volume of the topping or the weight of the topping.

The topping supply part 33 may include a topping supply housing 331 having a cylindrical shape, and a screw 332 that is disposed in the topping supply housing 331 and provided to allow the topping to ascend as the screw 332 rotates. The screw 332 may rotate in an extension direction thereof as an axial direction. The screw 332 may be constituted by a shaft extending in one direction, and a spiral wing provided around this shaft. The topping supply housing 331 may be disposed along a shape upwardly inclined toward the left, and the topping supply housing 331 may have an upper end that is coupled to the topping part 31. According to the rotation of the screw 332, the topping disposed inside the topping supply housing 331 may ascend to be supplied to the topping part 31. In order to rotate the screw 332, the topping supply part 33 may include a topping motor 333. The topping motor 333 may be a servo motor. As the topping motor 333 is controlled, a supply speed of the topping may be adjusted. The topping motor 333 may be coupled to a lower end of the topping supply housing 331.

The topping supply part 33 may include a topping hopper 334 that is coupled to a region adjacent to the lower end of the topping supply housing 331. A large amount of toppings are input into the topping hopper 334, and the toppings may fall to be input into the topping supply housing 331 by the topping hopper 334.

Each of the topping supply housing 331 and the screw 332 may be provided in plurality. The plurality of topping supply housings 331 and screws 332 may be aligned in the front and rear direction.

The applying apparatus 30 may include a pushing part 35. The pushing part 35 may include a pusher 351 disposed to be adjacent to a right end that is an end of the topping part 31 in the reference direction. The pushing part 35 may include a pusher driver 352 that moves the pusher 351 in the left and right direction. The pusher driver 352 may include a hydraulic cylinder, which has a left end coupled to the pusher 351, or the like.

The pusher 351 may extend in the front and rear direction and have a left side surface concavely recessed to the right when viewed in the front and rear direction. The pusher 351 may serve to re-push the topping, which is pushed to the right, to the left so that the topping accommodated by the topping part 31 is uniformly applied onto a right end of the dough stick P2. That is, the pusher 351 may have a side surface opposite to the reference direction, which is provided to be concave in the reference direction when viewed in a direction in which the dough stick P2 is transferred by the transfer apparatus 10.

The applying apparatus 30 may include a flatting part 36. The flatting part 36 may flatten the topping accommodated in the topping part 31. The flatting part 36 may include a flatting bar 361. The flatting bar 361 may move on an upper side of the topping plate 311 in one direction perpendicular to the top and bottom direction so as to flatten the topping accommodated in the topping part 31. The direction in which the flatting bar 361 moves may be the front and rear direction. The flatting bar 361 may be disposed to be spaced a predetermined height upward from the topping plate 311. The flatting part 36 may include a flatting rail 363 extending in the front and rear direction, and may include a flatting connector 362 that is coupled to the flatting rail 363 to be movable in the front and rear direction and coupled to the flatting bar 361. As the flatting connector 362 moves along the flatting rail 363 in the front and rear direction, the flatting bar 361 moves in the front and rear direction to flatten the topping accommodated in the topping part 31. The flatting rail 363 may be disposed at a position spaced apart to the right and upward from the topping part 31.

### Semi-finished product separating part (50)

The food processing system 1 according to an embodiment of the present invention may include a semi-finished product separating part 50. The semi-finished product separating part 50 may push the stick S of the semi-finished product P3 to separate the stick S from the transfer apparatus 10 when the semi-finished product P3 gripped by the transfer apparatus 10 is disposed to be adjacent to the deep fryer 40. The semi-finished product separating part 50 may deliver the semi-finished product P3 separated from the transfer apparatus 10 to the deep fryer 40. The semi-finished product separating part 50 may include a pushrod, which extends in the left and right direction, to push the stick S. When the gripping part 13 reaches the position adjacent to the deep fryer 40, the pushrod may approach the gripping part 13 to the right from a left side of the gripping part 13 to push the stick S to the right.

The semi-finished product P3 separated from the gripping part 13 by the semi-finished product separating part 50 may be delivered to the deep fryer 40. The deep fryer 40 may include a semi-finished product transfer part 44 that grips this semi-finished product P3.

### Deep fryer (40)

The deep fryer 40 is an apparatus that fries the semi-finished product P3 in oil. As illustrated, the deep fryer 40 may be disposed in a direction crossing the transfer direction, and may have a shape extending to the right from the transfer apparatus 10.

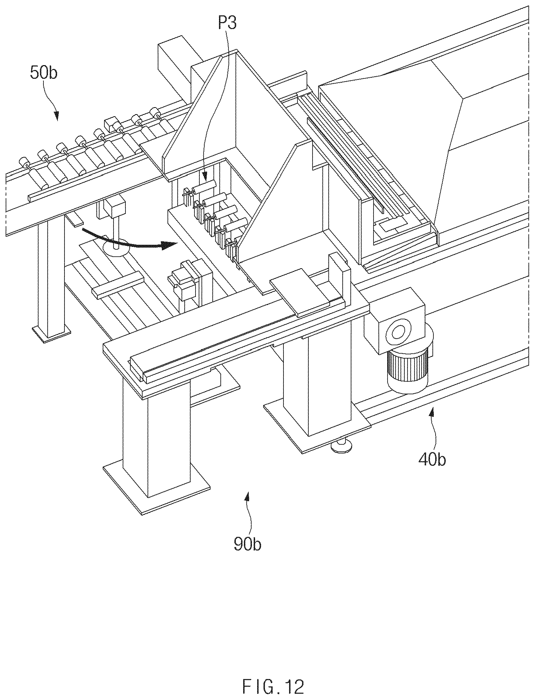

FIG. 12 is a perspective view illustrating a state in which a semi-finished product separating part 50b, a semi-finished product arranging part 90b, and a deep fryer 40 of a food processing system are disposed according to a modified example of an embodiment of the present invention.

The stick-type food processing system according to a modified example of an embodiment of the present invention is the same as the stick-type food processing system 1 according to an embodiment of the present invention except that the semi-finished product arranging part 90b is further included and the arranged direction of the deep fryer 40 is different. Thus, only the different parts are further described, and the description of the stick-type food processing system 1 according to an embodiment of the present invention applies to the other parts.

The deep fryer 40 of the stick-type food processing system according to a modified example of an embodiment of the present invention may be arranged in the front and rear direction that is the transfer direction. In order that a plurality of semi-finished products P3, which are arranged in the transfer direction and move in the transfer direction, enter the deep fryer 40, the direction in which the semi-finished products P3 are arranged has to change. Thus, the deep fryer 40 of the stick-type food processing system according to a modified example of an embodiment of the present invention may include the semi-finished product arranging part 90b. When the semi-finished product separating part 50b, which receives the semi-finished products P3 from an applying apparatus, delivers the semi-finished products P3 to the deep fryer 40, the semi-finished product arranging part 90b may rotate the arranged direction of the semi-finished products P3 as indicated by an arrow illustrated in FIG. 12, so that sticks S of the semi-finished products P3 are disposed to face the transfer direction or a direction opposite thereto. The semi-finished product arranging part 90b may include a gripping device (not shown) having a plurality of clips capable of gripping the sticks S, respectively, so that the gripping device grips and rotates each of the sticks S and then, couples the stick S to a semi-finished product transfer part. In FIG. 12, a position at which the semi-finished product arranging part 90b is disposed is indicated by the reference symbol. Referring to the drawing, the semi-finished product arranging part 90b may receive the semi-finished products P3, which are separated from the transfer apparatus, from the semi-finished product separating part 50b and arrange the semi-finished products P3 so that the direction in which the sticks S face faces the direction opposite to the transfer direction, to deliver the semi-finished products P3 to the semi-finished product transfer part. However, the semi-finished product arranging part 90b may also rotate the semi-finished products P3 so that the direction in which the sticks S face faces a direction opposite thereto.

In the stick-type food processing system according to a modified example of an embodiment of the present invention, a proceeding direction of an object to be processed is maintained to be the front direction starting from the filling ingredient N process to a finished product process. Thus, all of the components of the stick-type food processing system may be arranged in the front and rear direction to have an advantage in terms of space utilization.

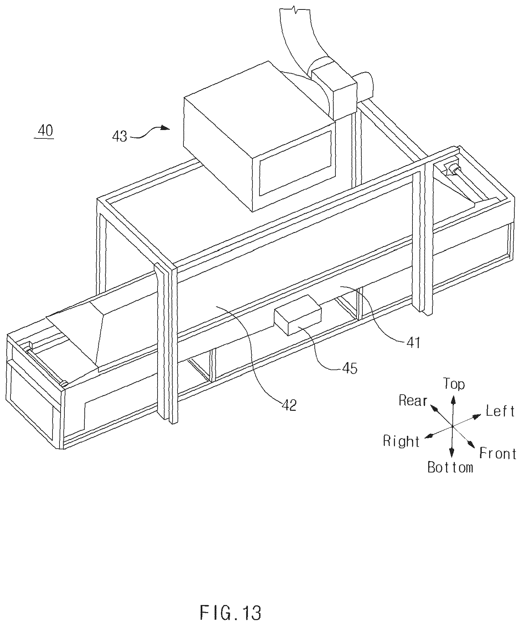

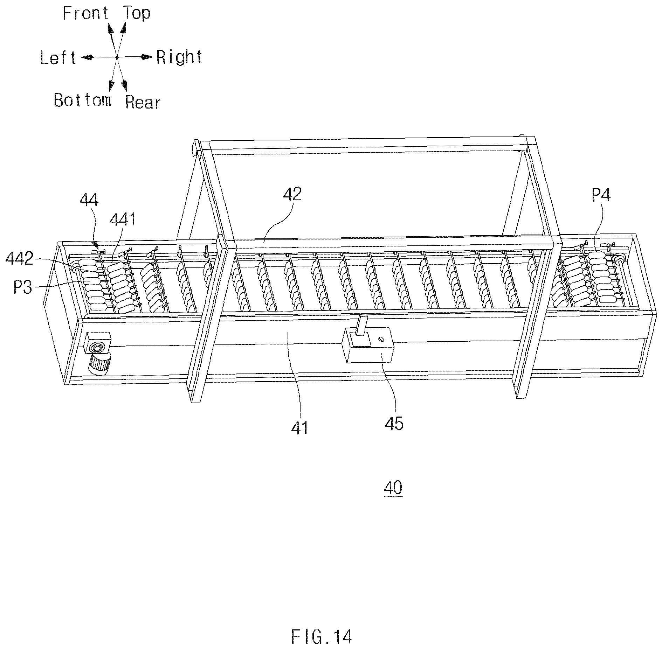

FIG. 13 is a perspective view of a deep fryer 40 according to an embodiment of the present invention. FIG. 14 is a view illustrating a state in which an inner structure of the deep fryer 40 is exposed to the outside according to an embodiment of the present invention.

The deep fryer 40 may include a frying part 41. The frying part 41 may heat oil accommodated therein to fry a semi-finished product P3 to be input to provide a cooked product P4. Thus, the frying part 41 may include an oil tank capable of accommodating the oil, and a heating part that heats the oil accommodated in the oil tank. The oil tank may have an inner space having a rectangular shape so that the oil is accommodated therein, and the heating part may include components such as heating wire that generates heat as power is supplied thereto. The deep fryer 40 may include a temperature adjusting part 45. The temperature adjusting part 45 may be electrically connected to the heating part of the frying part 41 and control the heating part to adjust a temperature of the oil.

The deep fryer 40 may include a semi-finished product transfer part 44. The semi-finished product transfer part 44 may transfer the semi-finished product P3 to the right across an upper side of the frying part 41. During the transfer operation of the semi-finished product P3, the semi-finished product transfer part 44 may allow the semi-finished product P3 to be inclined so as to be dipped into the oil accommodated in the frying part 41. Thus, while the transfer of the semi-finished product P3 is performed by the semi-finished product transfer part 44, the semi-finished product P3 may be dipped into and move out of the oil accommodated in the frying part 41 so that fried food is made and the cooked product P4 is provided. In order to enable this operation, the semi-finished product transfer part 44 may include a semi-finished product rail 441, which is disposed at each of the front and rear sides of the frying part 41 to extend in the left and right direction, and a semi-finished product slider 442 which is movably coupled to the semi-finished product rail 441.

The semi-finished product slider 442 may receive the semi-finished product P3 to grip the stick S. The semi-finished product slider 442 may be coupled to the semi-finished product rail 441 to be movable in the left and right direction, and may be rotatably coupled in the front and rear direction as an axial direction. Thus, the semi-finished product slider 442 may rotate while moving to the right side along the semi-finished product rail 441, so that the dough B, topping, and filling ingredient N of the semi-finished product P3 is dipped or not dipped into the oil accommodated in the frying part 41. As illustrated, the semi-finished product P3, which is not initially dipped into the oil, may be dipped as the semi-finished product slider 442 rotates while traveling along the semi-finished product rail 441 to the right, and then, the semi-finished product P3 may move out of the oil as the semi-finished product slider 442 rotates again before the semi-finished product P3 is finally discharged.

The deep fryer 40 may include a cover 42 that covers an upper side of the frying part 41. An inner structure of the deep fryer 40 may not be exposed to the outside by the cover 42. The deep fryer 40 may include an oil mist preventing filter 43. The oil mist preventing filter may suction the air containing oil mist generated from the frying part 41 to filter and discharge the oil mist.

### Refrigeration apparatus (70)

The stick-type food processing system according to an embodiment of the present invention may include a refrigeration apparatus 70. The refrigeration apparatus 70 may freeze the cooked product P4 provided by cooking the semi-finished product P3 in the deep fryer 40. Thus, the refrigeration apparatus 70 may be disposed at a right end of the deep fryer 40.

Although all of the components constituting the embodiments of the present invention are described to be combined as one unit or to operate as a combination thereof, the present invention is not necessarily limited to these embodiments. That is, within the scope of the present invention, all of the components may be selectively combined to one or more thereof to operate as a combination. The term such as "comprising," "configure", or "having", specifies the presence of components, unless there is a clearly different meaning in the present disclosure, but do not preclude the presence thereof and should be construed to further include other components. Unless otherwise defined, all terms including technical and scientific terms used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

The description of the present invention is intended to be illustrative, and various changes and modifications can be made by those of ordinary skill in the art to which the present invention pertains, without departing from the spirit and scope of the present invention as defined by the appended claims. Therefore, the embodiments set forth herein are to describe the technical spirit of the present invention and not to limit. The scope of the technical spirit of the present invention is not limited by the embodiments. Moreover, the protective scope of the present invention should be determined by reasonable interpretation of the appended claims and all technical concepts coming within the equivalency range of the present application should be interpreted to be in the scope of the right of the present application.

## Claims

1. A stick-type food preparation system comprising:
a forming apparatus configured to cover a filling-ingredient stick, which is provided by skewering a filling ingredient with a stick, with a dough;
an applying apparatus configured to apply a topping to a dough stick provided from the filling-ingredient stick in the forming apparatus; and
a deep fryer configured to deep-fry, in oil, a semi-finished product provided by applying the topping to the dough stick in the applying apparatus.

2. The stick-type food preparation system of claim 1, wherein the deep fryer comprises:
a frying part configured to heat oil accommodated therein; and
a semi-finished product transfer part configured to transfer the semi-finished product across an upper side of the frying part and allow the semi-finished product to be inclined so as to be dipped into the oil accommodated in the frying part during the transfer operation.

3. The stick-type food preparation system of claim 2, wherein the deep fryer further comprises a cover configured to cover an upper side of the frying part.

4. The stick-type food preparation system of claim 2, wherein the deep fryer further comprises an oil mist preventing filter configured to suction air containing oil mist generated from the frying part to filter and discharge the oil mist.

5. The stick-type food preparation system of claim 1, wherein, when receiving the semi-finished product from the applying apparatus, the deep fryer further comprises a semi-finished product arranging part configured to rotate and arrange the semi-finished product so that a direction in which the stick of the semi-finished product faces a direction, in which the semi-finished product is transferred, or a direction opposite to the direction in which the semi-finished product is transferred.

6. The stick-type food preparation system of claim 1, further comprising a transfer apparatus configured to grip the stick of the semi-finished product to transfer the semi-finished product to the deep fryer through the forming apparatus and the applying apparatus in the transfer direction.

7. The stick-type food preparation system of claim 6, wherein the transfer apparatus comprises:
a transfer operating part extending in the transfer direction;
a transfer frame coupled to the transfer operating part so as to move in the transfer direction according to rotation of the transfer operating part; and
a gripping part configured to grip the stick and rotatably coupled to the transfer frame.

8. The stick-type food preparation system of claim 6, further comprising a semi-finished product separating part configured to push the stick of the semi-finished product to separate the stick from the transfer apparatus when the semi-finished product gripped by the transfer apparatus is disposed to be adjacent to the deep fryer, so as to deliver the semi-finished product to the deep fryer.

9. The stick-type food preparation system of claim 1, further comprising a refrigeration apparatus configured to freeze a cooked product provided by cooking the semi-finished product in the deep fryer.

10. A stick-type food forming apparatus comprising:
a formation rotating part configured to rotate a filling-ingredient stick that is gripped by a transfer apparatus and provided by skewering a filling ingredient with a stick; and
a dough nozzle through which a dough is ejected onto the filling-ingredient stick rotated by the formation rotating part.

11. The stick-type food forming apparatus of claim 10, wherein the dough nozzle comprises:
a nozzle body; and
a slit having a long hole, wherein the slit is formed in the nozzle body so that the dough is ejected therethrough, and extends in a reference direction that is a direction in which the stick extends from the transfer apparatus.

12. The stick-type food forming apparatus of claim 11, wherein the nozzle body comprises:
a nozzle body base portion in which the slit is formed and which has a bottom surface perpendicular to a top and bottom direction; and
a nozzle body protrusion provided to protrude downward from an end of the bottom surface of the nozzle body base portion in the reference direction.

13. The stick-type food forming apparatus of claim 11, wherein the nozzle body is provided to be elevatable and movable in a direction in which the stick extends.

14. The stick-type food forming apparatus of claim 10, wherein the formation rotating part is configured to rotate the filling-ingredient stick in an axial direction that is the direction in which the stick extends.

15. The stick-type food forming apparatus of claim 10, wherein the formation rotating part is provided to be selectively coupled to a gripping part rotatably coupled to a transfer frame, which is movable along a transfer operating part of the transfer apparatus, to rotate the gripping part with respect to the transfer frame.

16. A topping applying apparatus for stick-type foods, the topping applying apparatus comprising:
a topping part comprising a topping plate provided to be disposed below a dough stick that is gripped by a transfer apparatus and provided by skewering a filling ingredient with a stick and applying the dough; and
a topping rotating part configured to rotate the dough stick gripped by the transfer apparatus with respect to the topping part so as to apply the topping accommodated in the topping part onto the dough stick, which is gripped by the transfer apparatus, from above the topping plate.

17. The topping applying apparatus of claim 16, wherein the topping plate is provided to move in a top and bottom direction to be close to the dough stick or to be away from the dough stick.

18. The topping applying apparatus of claim 16, wherein the topping rotating part is configured to rotate the dough stick in an axial direction that is a direction in which the stick extends.

19. The topping applying apparatus of claim 16, further comprising, when a direction in which the stick extends from the transfer apparatus is a reference direction, a pusher disposed to be adjacent to an end of the topping part in the reference direction.

20. The topping applying apparatus of claim 19, wherein the pusher has a side surface opposite to the reference direction, which is provided to be recessed in the reference direction when viewed in a direction in which the dough stick is transferred by the transfer apparatus.

21. The topping applying apparatus of claim 16, further comprising a topping supply part connected to a lower end of the topping part so as to allow the topping to ascend to be supplied to the topping part.

22. The topping applying apparatus of claim 21, wherein the topping supply part comprises a topping supply housing having a cylindrical shape, and a screw disposed in the topping supply housing and configured to allow the topping to ascend as the screw rotates.

23. The topping applying apparatus of claim 16, further comprising a flatting bar configured to move on an upper side of the topping part in one direction perpendicular to the top and bottom direction so as to flatten the topping accommodated in the topping part.

24. The topping applying apparatus of claim 16, wherein the topping rotating part is provided to be selectively coupled to a gripping part, which is rotatably coupled to a transfer frame movable along a transfer operating part of the transfer apparatus, to rotate the gripping part with respect to the transfer frame.
